# EUROPEAN PATENT SPECIFICATION

(11) **EP 2 321 381 B1**
(45) Date of publication and mention of the grant of the patent: **28.08.2024**
(21) Application number: 09798835.6
(22) Date of filing: 17.07.2009
(51) Int. Cl.: B01J 8/00, C10G 11/18, C10G 11/00, G06Q 10/087

(54) **Method of material delivery to a plurality of FCC units**
Verfahren zur Materialausgabe an mehrere FCC Einheiten
Procédé pour distribuer de matériaux à une pluralité des unités FCC

(30) Priority: 17.07.2008 US 81646
(43) Date of publication of application: 18.05.2011
(73) Proprietor: Johnson Matthey Process Technologies, Inc., Manasquan, NJ 08736 (US)
(72) Inventor: EVANS, Martin, Tolland, CT 06084 (US)
(74) Representative: Boult Wade Tennant LLP
(86) International application number: PCT/US2009/051066
(87) International publication number: WO 2010/009443

(56) References cited:
- WO-A1-01/05496
- WO-A1-2008/071842
- WO-A1-2009/021258
- WO-A2-2005/051528
- WO-A2-2005/052091
- US-A- 2 745 795
- US-A- 2 865 848
- US-A- 5 579 588
- US-A1- 2006 074 571

## Description

### BACKGROUND OF THE INVENTION

### Field of the Invention

The invention generally relates to methods of metering and delivering a material to one or more FCC units. Particularly, the invention relates to methods for delivering one or more materials to multiple FCC units.

### Description of the Related Art

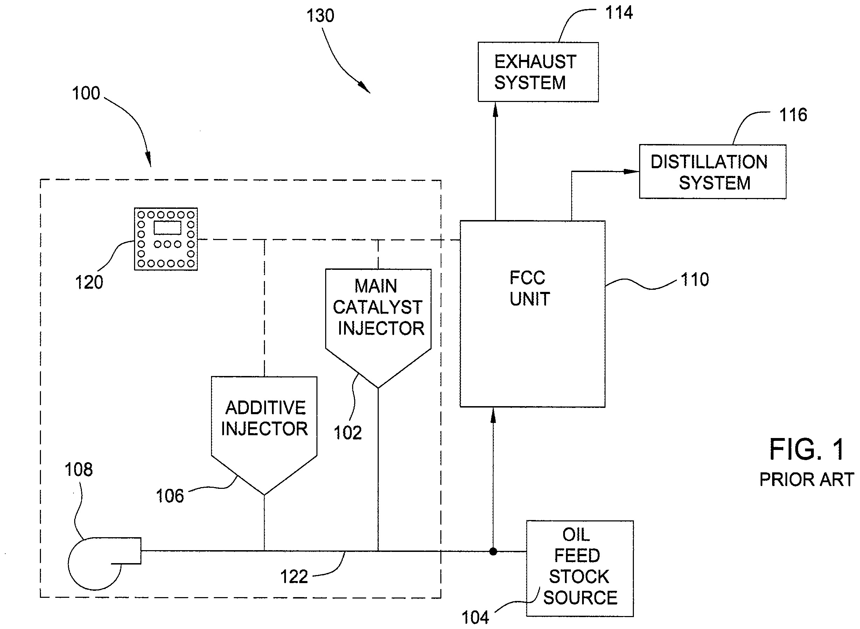

Some industrial processes, such as fluid catalytic cracking systems, deliver one or more specified amount of a material such as a catalyst(s) or additives to a single FCC unit. FIG. 1 is a simplified schematic of one embodiment of a conventional fluid catalytic cracking system 130. The fluid catalytic cracking system 130 includes a FCC unit 110 coupled to catalyst or additive addition system, etc. 100, an oil feed stock source 104, an exhaust system 114 and a distillation system 116. Catalyst from the catalyst addition system 100 and oil from the oil feed stock source 104 are delivered to the FCC unit 110.

The catalyst addition system 100 may include a main catalyst injector 102 and one or more additive injectors 106. The main catalyst injector 102 and the additive injector 106 are coupled to the FCC unit 110 by a process line 122. A fluid source, such as a blower or air compressor 108, is coupled to the process line 122 and provides pressurized fluid, such as air, that is utilized to carry the various products, such as a catalyst, additive, equilibrium spent catalyst, catalyst fines, etc. from the injectors 102, 106 through the process line 122 where they are combined with oil from the oil feed stock source 104 and delivered into the FCC unit 110.

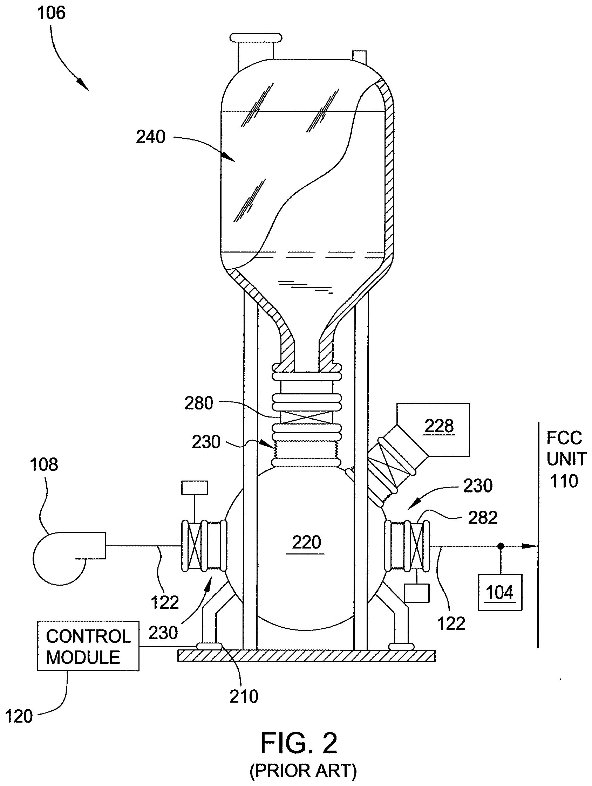

FIG. 2 is an embodiment of a conventional additive injector 106. The additive injector 106 includes a pressure vessel 220 and a low pressure storage vessel 240. Such conventional additive injectors do not deliver one or more materials to one or more units or industrial processes other than to a single FCC unit. Such conventional additive injectors also do not deliver one or more materials to multiple FCC units.

Thus, a need still exists for a method and apparatus or system capable of delivering one or more materials to one or more industrial process units. A need also still exists for a method and apparatus or system capable of delivering one or more materials to a plurality of FCC units.

WO2005051528 (A2) discloses a mobile fluid cracking catalyst injection system and a method of controlling a fluid catalyst cracking process. In one embodiment, a mobile fluid catalyst cracking system includes a transportable platform, a catalyst reservoir coupled to the platform and a flow control device coupled to an outlet of the reservoir and adapted to control the flow of catalyst from the reservoir to a fluid catalyst cracking unit.

### SUMMARY OF THE INVENTION

The purpose and advantages of the invention will be set forth and apparent from the description that follows, as well as will be learned by practice of the invention. Additional advantages will be realized and attained by the methods and systems particularly pointed out in the written description and claims hereof, as well as from the appended drawings.

The invention provides a method according to claim 1

The invention includes a method of providing a material to a plurality of FCC units. The method includes dispensing material from a delivery vessel, wherein a metering device provides a metric indicative of the dispensed material with respect to the plurality of FCC units; and delivering the metered material to the plurality of FCC units via a plurality of dispense mechanism outlets of the delivery vessel coupled to the plurality of FCC units.

The invention includes a method of providing a material to a plurality of FCC units. The method includes: dispensing a metered metric of material from a delivery vessel to a first FCC unit via a dispense mechanism outlet of a delivery vessel; and dispensing a metered metric of material to a second FCC unit via a dispense mechanism outlet of the delivery vessel.

The accompanying figures, which are incorporated in and constitute part of this specification, are included to illustrate and provide a further understanding of the method of the invention. Together with the description, the figures serve to explain the principles of the invention. It is contemplated that features from one embodiment may be beneficially incorporated in other embodiments without further recitation.

### BRIEF DESCRIPTION OF THE DRAWINGS

FIG.1 is schematic view of a conventional fluid catalytic cracking system;
FIG. 2 is a elevation view of a conventional catalyst injector having a low pressure storage vessel;
FIG. 3A is a schematic view of a material delivery system with a plurality of dispense mechanisms outlets coupled separately to a plurality of units,;
FIG. 3B is a schematic view of a material delivery system with a plurality of dispense mechanisms outlets coupled to a plurality of units, wherein at least one of the dispense mechanisms outlets is selectively coupled to at least two of the plurality of units, in accordance with the invention;
FIG. 3C is a schematic view of a material delivery system with a plurality of dispense mechanisms outlets coupled separately to a single unit not in accordance with the invention;
FIG. 3D is another schematic view of a material delivery system with a plurality of dispense mechanisms outlets coupled to a single unit, not in accordance with the invention
FIG. 4A is a schematic view of a material delivery system not in accordance with the invention;
FIG. 4B is a schematic view of a material delivery system not in accordance with the invention;
FIG. 4C is a schematic view of a material delivery system not in accordance with the invention;
FIG. 4D is an upper level schematic diagram of a material delivery system not in accordance with the invention;
FIG. 5 is a schematic view of a fluid catalytic cracking system coupled to a material delivery system not in accordance with the invention with a plurality of separate material storage containers;
FIG. 6 is a schematic view of a fluid catalytic cracking system coupled to a material delivery system with the delivery vessel having at least two compartments in accordance with the invention;
FIG. 7 is a schematic view of a fluid catalytic cracking system coupled to a mobile material delivery system in accordance with the invention;
FIG. 8 is a flow diagram of a method of providing a material to a plurality of FCC units in accordance with the invention;
FIG.9 is another flow diagram of another method of providing material to a plurality of FCC units in accordance with the disclosure; and
FIG.10 is another flow diagram of another method of providing material to a plurality of FCC units in accordance with the disclosure.

To facilitate understanding, identical reference numerals have been used, wherever possible, to designate identical elements that are common to the figures.

### DETAILED DESCRIPTION

Reference will now be made in detail to exemplary embodiments of the invention, which are illustrated in the accompanying figures and examples. Referring to the drawings in general, it will be understood that the illustrations are for the purpose of describing a particular embodiment of the invention and are not intended to limit the invention thereto.

Whenever a particular embodiment of the invention is said to comprise or consist of at least one element of a group and combinations thereof, it is understood that the embodiment may comprise or consist of one or more of any of the elements of the group, either individually or in combination with any of the other elements of that group. Furthermore, when any variable or part occurs more than one time in any constituent or in formula, its definition on each occurrence is independent of its definition at every other occurrence. Also, combinations of parts and/or variables are permissible only if such combinations result in stable apparatus, system or method. The invention provides methods of metering and delivering material to a plurality of FCC units.

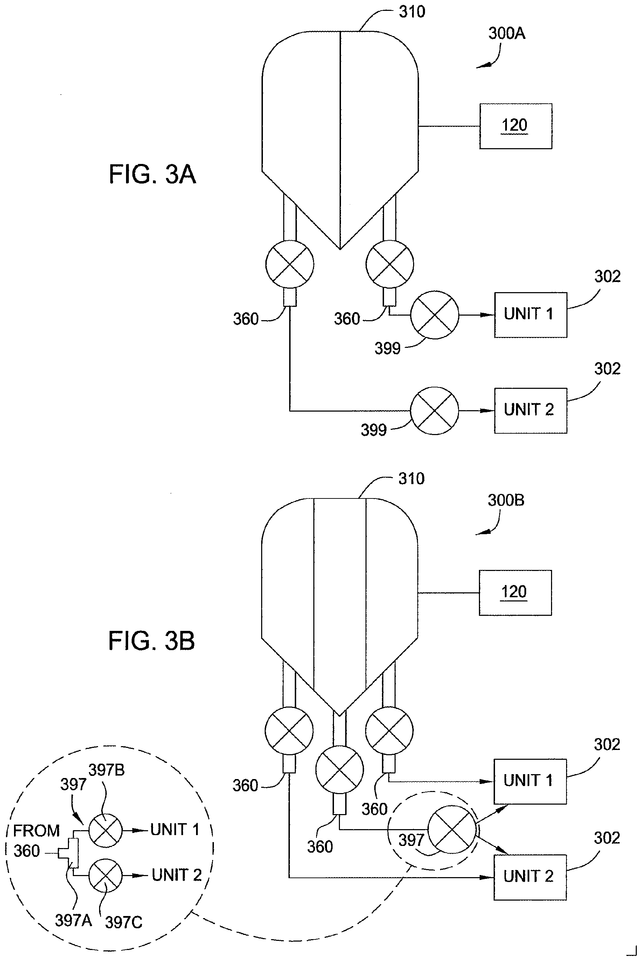

With reference to FIG. 3A, which is not according to the invention, there is shown a material delivery system 300A. The material delivery system 300A includes one or more delivery vessels 310 and one or more dispense mechanism outlets 360. The one or more dispense mechanism outlets 360 are configured to couple the vessel 310 to one or more units 302 and the one or more dispense mechanism outlets 360 are configured to deliver material to the one or more units 302. When the unit is an FCC unit, the unit comprises a plurality of units.

The delivery vessel is configured to deliver material to a plurality of FCC units. The the delivery vessel includes a plurality of dispense mechanism outlets 360 adapted for coupling to the plurality of FCC units 302. A respective dispense mechanism outlet 360 is coupled to the one or more respective FCC units 302. Alternatively, a dispense mechanism outlet 360 is adapted for coupling to the plurality of FCC units sequentially, wherein the outlet is alternatively sequentially configured to be coupled to the plurality of FCC units.

One or more load cells are configured to provide a metric indicative of known force imparted on the load cell or delivery vessel.

One or more devices to minimize backflow 399 may be utilized in-line between the unit 302 and the dispense mechanism outlet 360 to minimize or prevent backflow from the unit 302 to the vessel 310 and or minimize or prevent backflow from one unit to another unit. The device to minimize backflow 399 includes a safety valve. A control module 120 may be interfaced with the safety valve 399 and associated dispense mechanism outlet 360 to control the operational states such that the safety valve 399 is only open if the pressure on the delivery vessel-side of the safety valve 399 is greater than the pressure on the unit-side of the safety valve 399. Alternatively, the device to minimize backflow 399 includes one or more simple mechanical check valve, also known as non-return valve. Non-limiting examples of simple mechanical check valves include swing or flapper type. Incorporation of the device to minimize backflow 399 is optionally contemplated in all embodiments.

As shown in Figure 3A, the plurality of dispense mechanisms outlets 360 are respectively coupled to a plurality of units 302 separately.

As as shown in Figure 3B, according to the invention, the plurality of dispense mechanism outlets 360 of a delivery system 300B are respectively coupled to a plurality of units 302 separately, wherein at least one of the dispense mechanism outlets 360 is coupled to a selected one of the units 302 by a selector or diverter valve 397. The selector valve may also be several shut off valves coupled by a T. The T is coupled to the outlet of the one or more dispense mechanisms. The outlets of the shut off valves are coupled to the plurality of units. In Figure 3B, one or more outlets 360 or pipings of the outlet which couples to the multiple units 302 are connected at least partially at one or more points.

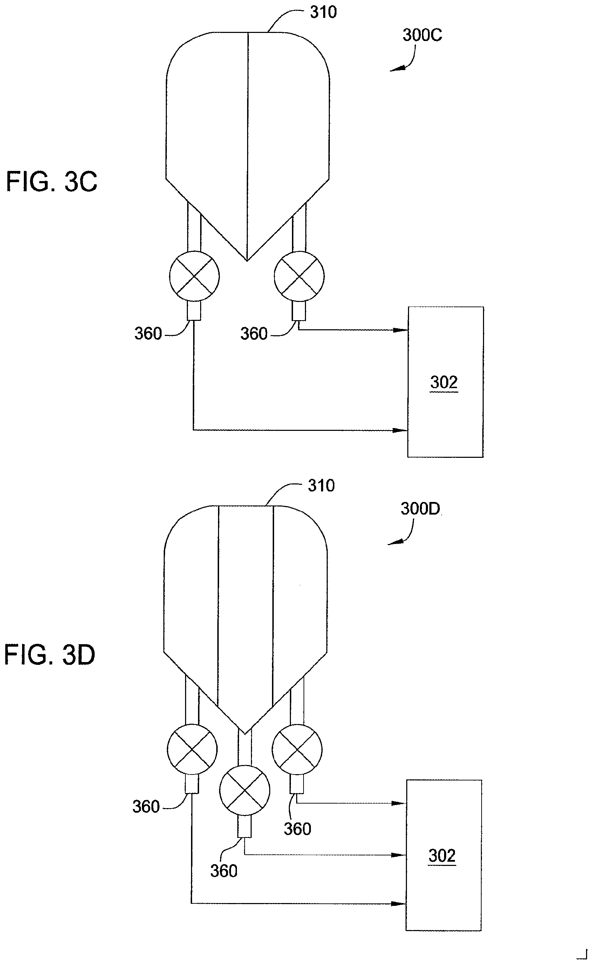

In another delivery system 300C not according to the invention, as shown in Figure 3C, a plurality of dispense mechanism outlets 360 are respectively coupled to a single unit 302.

In delivery system 300D, not according to the invention as shown in Figure 3D, a plurality of dispense mechanisms are respectively coupled to a single unit 302.

**The** material delivery system 300B suitable for delivering various materials is not limited by what the material is being delivered or the form of the material being delivered. Examples of compositions of material include but are not limited to alumina, silica, zirconia, aluminosilicates, hydrotalcites such as described in Applicant's US patent 6028023 and precursors to hydrotalcites such as described in Applicant's US patent 7347929 etc., either individually or in a combination of two or more thereof. Non-limiting examples of the form of material include liquid, powder, formed solid shapes such as microspheres, beads, and extrudates, either individually or in a combination of two or more forms. Materials may be referred as and include catalyst, product, powder, additive, equilibrium spent catalyst, and catalyst fines. Non-limiting examples of material delivery systems 300 include a material addition vessel such as a pressurized vessel, a batching vessel for delivering as liquid, powders, and formed solid shapes such as microspheres, beads, and extrudes, either individually or in a combination of two or more, and storage vessels for liquid, powders, and formed solid shapes such as microspheres, beads, and extrudates, either individually or in a combination of two or more.

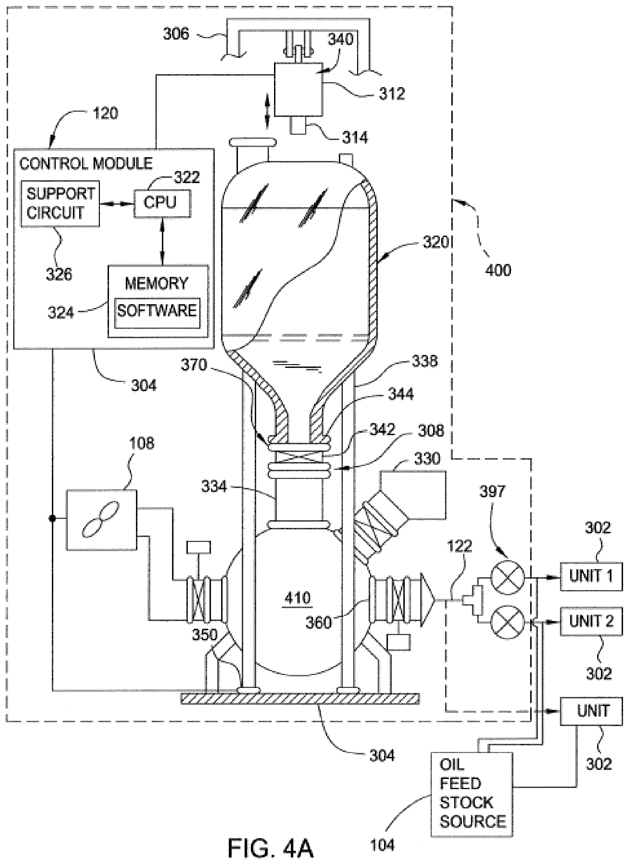

The material delivery system 300 B is configured to deliver material to a plurality of units 302 that are FCC units. In such embodiment, the delivery vessel may have an operational pressure of about 0 to about 100 pounds per square inch. The FCC unit is adapted to promote catalytic cracking of petroleum feed stock provided from a source and may be configured in a conventional manner. The material delivery system 300B is configured to deliver material to the plurality of FCC units through the outlet or outlets of the 360 of the delivery vessel 310 that is coupled to the units 302. In a system not according to the invention illustrated in FIG. 4A, a material delivery system 400 may be supported on a surface 304, such as a concrete pad, metal structure or other suitable support. Although not completely shown, the frame 306 is supported by the surface 304. The frame 306 may be fabricated from any rigid materials suitable such that deflection of the frame 306 does not introduce error into the measurement by the load cell 350.

In FIG. 4A, the material delivery system 400 may also include a separate material storage container and a pressure control device 330. The material delivery system 400 may be configured to be coupled to one or more units 302 as described with reference to FIGS. 3A-D, among other configurations. One or more storage containers 320 are interfaced with the load cell 350 such that changes in the weight of a storage container 320 may be utilized to determine the amount of material i.e. catalyst, product, powder, additive, etc., delivered to the one or more units 302 through the delivery vessel 310. The pressure control device 330 is coupled to the delivery vessel and configured to selectively pressurize the delivery vessel relative to the storage vessel to a pressure sufficiently high to provide material to the unit 302..

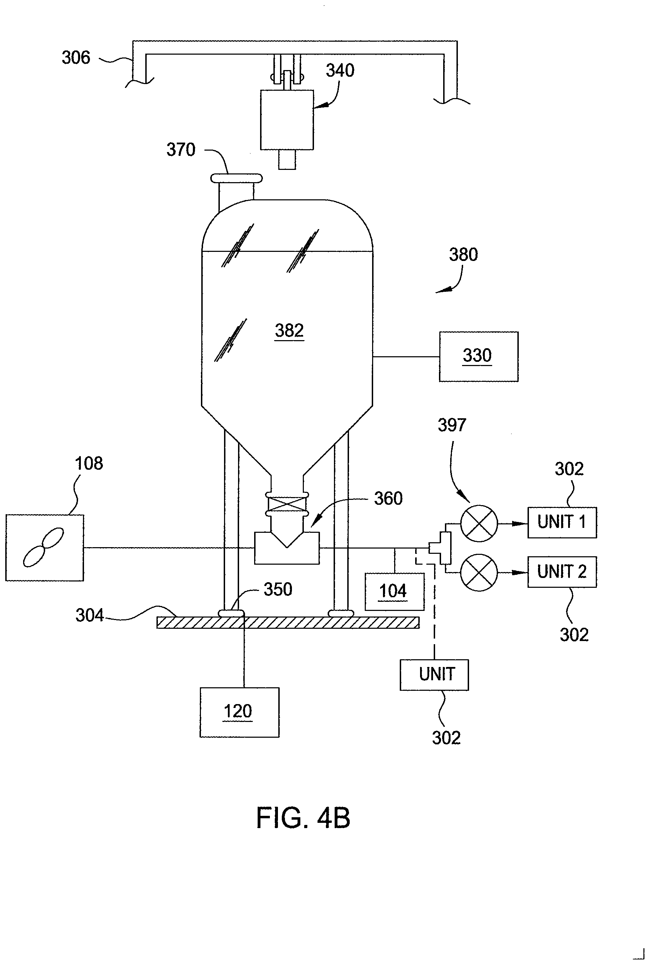

FIG. 4B depicts another
material delivery system 380 not according to the invention. The material delivery system 380 may be configured to be coupled to one or more units 302 as described with reference to FIGS. 3A-D, among other configurations. The material delivery system 380 includes a pressure vessel 382 of a size suitable for storing enough material for a number of material additions performed over a selected interval, such as over a 24 hour period. The material delivery system 380 generally has a pressure control device 330, and at least one of load cell 350. The vessel 382 is loaded while at atmospheric or sub-atmospheric pressure though an inlet port 370. Once the vessel 382 is loaded, the inlet port 370 is closed and the vessel 382 is pressurized by the pressure control device 330 to a level that facilitates delivery of the material to the unit 302. Catalyst may be metered to a FCC unit by selectively opening an outlet port 360 of the vessel 382. The load cells 350 are utilized to monitor the change in weight of the vessel 382 such that the amount of material delivered to the unit 302 through the outlet port 360 can be resolved..

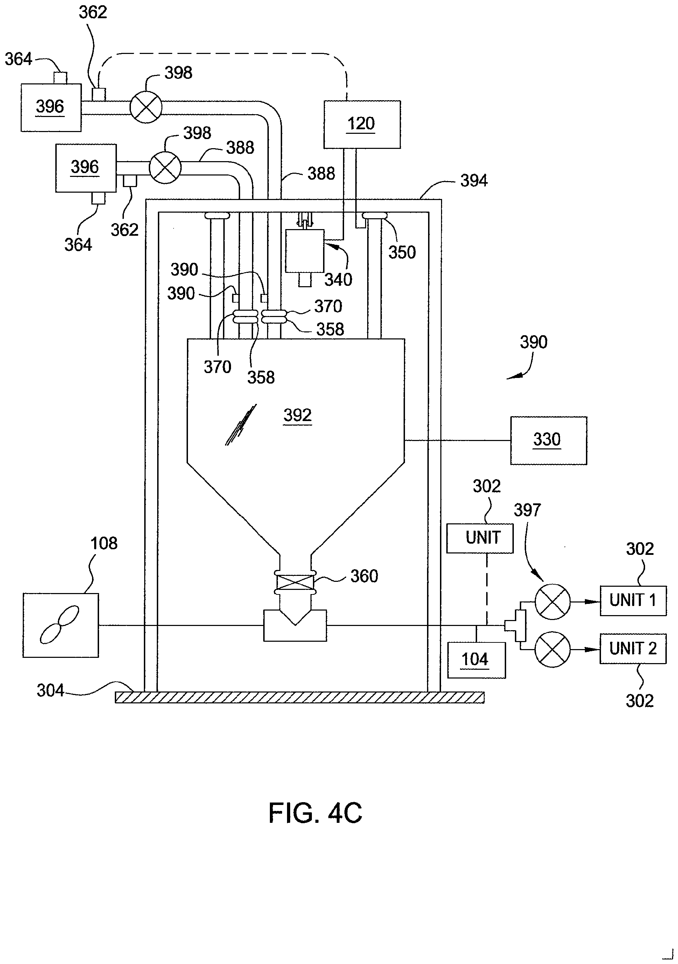

FIG. 4C, also not according to the invention, depicts a material delivery system 390 connected to more than one unit 302. The material delivery system 390 may be configured to be coupled to one or more units 302 as described with reference to FIGS. 3A-D, among other configurations. The material delivery system 390 includes a pressure vessel 392 shown suspended from a frame 394. Alternatively, the vessel 392 may be supported from the surface 304. The size of the vessel 392 may be selected to store enough material for a number of material additions performed over a selected interval, such as over a 24 hour period. Alternatively, the size of the vessel 392 may be selected to store only enough material for a single addition of material to the system, or for a limited number of additions performed over a selected interval. The material delivery system 394 generally has a pressure control device 330, and at least one of load cell 350. The vessel 392 may be loaded while at atmospheric or sub-atmospheric pressure through an inlet port 370 from one or more storage containers 396. The vessel 392 may also be loaded at slightly positive pressure. Selection between storage containers 396 may be made using a manifold and/or control valves coupling the containers 396 to a common inlet port, or by selectively actuating a respective valve 398 disposed in series with a hose 388 individually coupling each container 396 to a respective inlet port 370. The inlet ports 370 may be fitted with self-sealing quick connects which prevent flow through the port 370 when the hose 388 is not connected. Alternatively, each port 370 may be fitted with a valve to control the flow therethrough. The containers 396 may be used to hold different or the same type of material. Although only two containers 396 are shown, it is contemplated that the material delivery system 390 may be configured to accept any number of containers 396. Once the vessel 392 is loaded, the inlet port 370 is closed and the vessel 392 is pressurized by the pressure control device 330 to a level that facilitates delivery of the material. Material is metered to the unit 302 by selectively opening an outlet port 360 of the vessel 392. The load cells 350 may be configured to monitor the change in weight of the vessel 392 such that the amount of material delivered to the unit 302 through the outlet port 360 can be resolved.

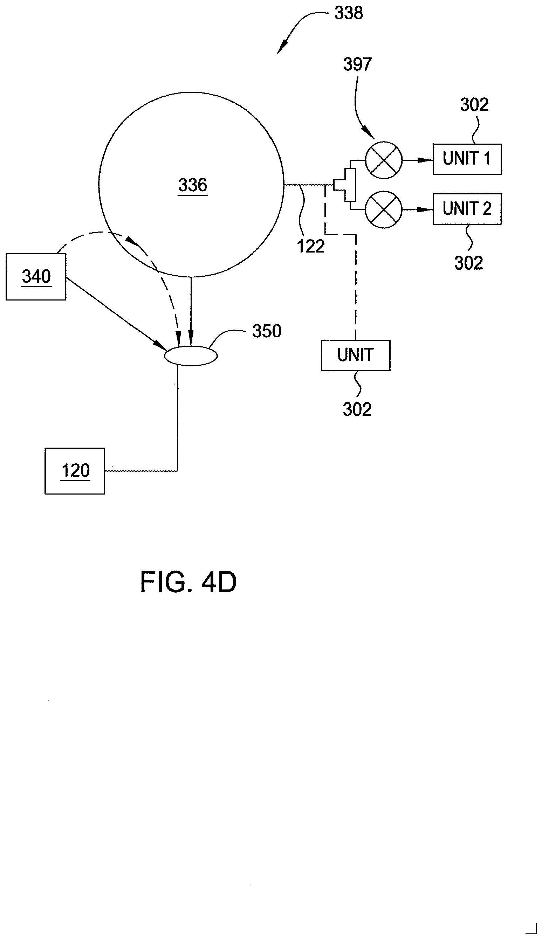

FIG. 4D is a high level schematic diagram of another material delivery system 338 not according to the invention. The material delivery system 338 may be configured to be coupled the unit 302 as described with reference to FIGS. 3C-D, among other configurations. The material delivery system 338 includes one or more material delivery vessels 336. At least one vessel 336 is interfaced with one or more load cells 350. The one or more load cells 350 are coupled to the vessel 336 in a manner that enables a control module 120 to resolve an amount of material passing through the system 338 to one or more units 302. The one or more load cells 350 may be utilized to determine a change in weight of at least one material delivery vessel 336 which is indicative of the amount of material provided by the material delivery system 338 to at one or more unit 302.

The material delivery system 338 may further include an automated weight calibration device 340. The automated weight calibration device 340 is adapted to impart a force of known value to the vessel 336 or a load cell of the material delivery vessel 336. The automated weight calibration device 340 is configured to generate a force upon the vessel 336. The force may be a push or pull. The automated weight calibration device 340 may be coupled to the vessel 336, or only contact the vessel 336 when actuated to generate the force. It is also contemplated that the automated weight calibration device 340 may be coupled to the vessel 336 and actuated to exert a force on the frame 306 or surface 304 (such as shown for example in FIG. 4C). The automated weight calibration device 340 may be a pneumatic or hydraulic cylinder, a motorized power or lead screw, a cam, linear actuator or other suitable force generation device. The amount of force generated by the automated weight calibration device 340 is generally selected to be in a range suitable for calibrating the load cells 350.

In FIG. 4A, the automated weight calibration device 340 is a pneumatic cylinder 312 having a rod 314 that may be actuated to contact and press against the container 320. By precisely controlling the pressure of the air provided to the cylinder 312, the rod 314 will exert a predetermined force against the container 320 which can be utilized to confirm the accuracy and/or calibrate the load cell 350. Systems and methods of using calibration device are disclosed in United States Application Serial number 11/923,136.

The material delivery system is coupled to a plurality of FCC units, and is configured to deliver one or more materials into the units to control processing attributes such as the ratio of products recovered in a distiller of the FCC unit and/or to control the emissions from the FCC unit. The material delivery system includes a control module 120 to control the rates and or amounts of material that the material delivery system provides to the FCC units 302.

Referring to FIG. 4A, the control module 120 has a central processing unit (CPU) 322, memory 324, and support circuits 326. The CPU 322 may be one of any form of computer processor that can be used in an industrial setting for controlling various chambers and subprocessors. The memory 324 is coupled to the CPU 322. The memory 324, or computer-readable medium, may be one or more of readily available memory such as random access memory (RAM), read only memory (ROM), floppy disk, hard disk, or any other form of digital storage, local or remote. The support circuits 326 are coupled to the CPU 322 for supporting the processor in a conventional manner. These circuits include cache, power supplies, clock circuits, input/output circuitry, subsystems, and the like. In one embodiment, the control module 120 is a programmable logic controller (PLC), such as those available from GE Fanuc. However, from the disclosure herein, those skilled in the art will realize that other control modules such as microcontrollers, microprocessors, programmable gate arrays, and application specific integrated circuits (ASICs) may be used to perform the controlling functions of the control module 120. Control module 120 that may be adapted to benefit from the invention is described in the United States Patent No. 7,050,944 issued May 23, 2006; United States Patent No. 6,859,759 issued February 22, 2005; United States Patent No. 7,369,959 issued May 6, 2008,; United States Patent Application Serial No. 10/859,032 filed June 2, 2004; and United States Patent Application Serial No. 11/136,024 filed May 24, 2005.

The procedure is generally stored in the memory of the control module 120, typically as a software routine. The software routine may also be stored and/or executed by a second CPU (not shown) that is remotely located from the hardware being controlled by the control module 120. Although the procedure or parts are discussed as being implemented as a software routine, some of the disclosed method steps may be performed in hardware as well as by the software controller, or manually. As such, the invention may be implemented in software as executed upon a computer system, in hardware as an application specific integrated circuit, or other type of hardware implementation, manually, or a combination of software, hardware, and/or manual steps.

Thecontrol module 120 of the material delivery system includes, but is not limited to, one or more of the following components either individually or in a combination of two or more: Interface screen such as a standard or touch screen; Input device such as buttons, mouse, keyboard, touch screen, PLC or other control device; Connection between devices such as direct integration, interconnect cable, Ethernet network; Communication router/modem for connecting to a remote location via land line Telco line, internet or other wireless data network; MODBUS or other hardwire connection for connection to the control room or other central location of the plant where the unit is being used; Power supply for providing electrical power to the electrical devices; Solenoid valves, relays, etc. which are connected to either the PLC or central processing unit which are capable of modulating the position of the valves as well as read the input data from the various sensors and other devices connected to the unit; and or Antenna of communication of router/modem to internet or other wireless data network.

Sensors may provide one or more of the following information: In FIG. 4C, sensors 362 are mounted proximate the inlet ports 370 such that a determination of whether or not a specific hose 388 is connected to the inlet port 370 of the pressure vessel 392. If a hose 388 is not connected to the port 370, the specific valves(s) associated with that particular port 370 can be automatically locked so that catalyst is not released from that port. This locking may be performed on manually or automated using the control module 120. The locking of a specific port permits safer operation of the delivery system 390 and prevents release of materials into the environment. Furthermore, by taking only a specific port off-line, the delivery system 390 may continue to safely operate and provide material to the unit 302 such that the unit 302 can continue to operate without interruption or down time, in an automatic mode of operation. Once the sensor 362 indicates re-connection to the container/bin, the availability of material from the container 396 associated with that hose 388 is recognized by the control module 120. The valves are capable of withstanding repeated cycling with streams containing abrasive materials, such as but not limited to, ceramic powders, clay, aluminum oxide, silicon oxide, zeolite, phosphorus oxide, or other high temperature reaction products.

If additional safety is required, a light, horn or other notification device can be activated to notify the operator to switch from inactive to active for the specific port 370 using the computer control module 120.

A sensor 362 may be affixed to the end of the hose 288 coupled to the container 396. The sensor 362 is configured to provide the control module 120 with a metric indicative of at least one of the presence of the container or material disposed in the container. The sensor 362 may detect information provided on an RF readable tag 364 coupled to the container 396. The RF readable tag 364 may contain information relating to the unique identification of the container 396, such that the control module 120 may obtain information relating to the material inside that container 396. The tag 364 may include information relating to the material inside container 396. Thus, utilizing the sensor 362, the control module 120 can confirm that a container 396 containing the correct material was coupled to the hose 388, thereby ensuring that the correct material is injected into the unit 302 while minimizing the potential for operator error. It is contemplated that information from the sensors 362 and 362 may be utilized to lock the associated port 370 as described above. The sensor 362 may detect information provided on a bar code coupled to the container 396. In yet another embodiment, the sensor 362 detects information provided on an RF readable tag 364 and or bar code coupled to the container 396

Referring to FIG. 4A, the material delivery 400 may also include one or more sensors for providing a metric suitable for determining the amount of material passing through the metering device 308 during each transfer of material to the vessel 410. Alternatively, the sensors may be configured to detect the level (i.e., volume) of material in the material storage container 320, the weight of material in the material storage container 320, the rate of material movement through the material storage container 320, discharge port 344, metering device 308, and/or material delivery line 334 coupling the container 320 and vessel 410, or the like.

The sensor may include a plurality of load cells 350 adapted to provide a metric indicative of the weight of material in the material storage container 320. The load cells 350 are respectively coupled to a plurality of legs 348 that support the material storage container 320 above a mounting surface 304. Each of the legs 348 has one of the plurality of load cells 350 coupled thereto. From sequential data samples obtained from the load cells 350, the control module 120 may resolve the net amount of transferred material after each actuation of the metering device 308 (e.g., the control valve 342). Additionally, the cumulative amount of material dispensed over the course of the production cycle may be monitored so that variations in the amount of material dispensed in each individual cycle may be compensated for by adjusting the delivery attributes of the metering device 308, for example, by changing the open time of the control valve 342 to allow more (or less) material to pass there through and into the delivery vessel 410 for ultimate injection into the unit 302.

The sensor may be a level sensor (not shown) coupled to the material storage container 320 and adapted to detect a metric indicative of the level of material within the material storage container 320. The level sensor may be an optical transducer, a capacitance device, a sonic transducer or other device suitable for providing information from which the level or volume of material disposed in the material storage container 320 may be resolved. By utilizing sensed differences in the levels of material disposed within the material storage container 320 between dispenses, the amount of material delivered may be resolved for a known storage vessel geometry.

The sensor may be a flow sensor (not shown) adapted to detect the flow of material through one of the components of the material delivery system described herein. The flow sensor may be a contact or non-contact device and may be mounted to the material storage container 320 or the material delivery line 334 coupling the material storage container 320 to the delivery vessel 410. For example, the flow sensor may be a sonic flow meter or capacitance device adapted to detect the rate of entrained material (i.e., catalyst) moving through the material delivery line 334.

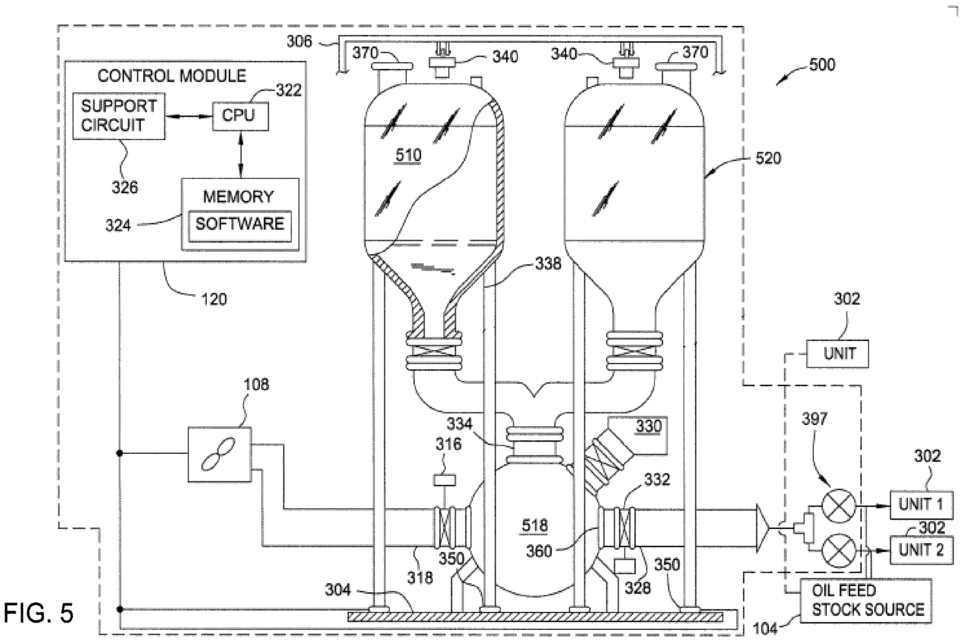

FIG. 5, not according to the invention, depicts a material delivery system 500 adapted to provide multiple materials to one or more units 302, such as an FCC unit. The material delivery system 500 may be configured to be coupled the unit 302 as described with reference to FIGS. 3C-D, among other configurations. The material delivery system 500 includes a delivery vessel 518 coupled to a plurality of separate material storage containers (i.e. storage vessels or low pressure vessels), illustratively shown as a first low pressure material storage container 510 and a second low pressure storage container 520. Any number of low pressure material storage containers may be coupled to a single delivery vessel 518, based on need and desire of the number of materials or time limit of material delivery, etc.

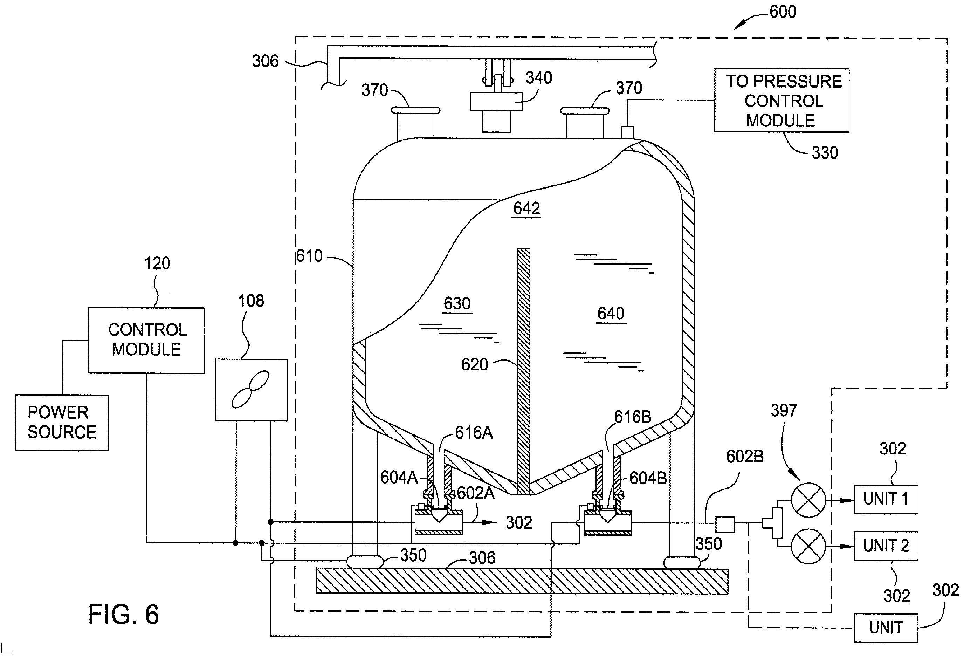

FIG. 6 depicts a material delivery system 600 coupled to a plurality of FCC units 302. The material delivery system 600 may be configured to be coupled the unit 302 as described with reference to FIGS. 3C-D, among other configurations. The material delivery system 600 is adapted to provide multiple materials to the unit(s) 302, either in a mixed state or individually. The material delivery system includes a delivery vessel 610 interfaced with one or more load cells 350 suitable for providing a metric suitable for resolving a change in weight of the vessel 610.

The vessel 610 also includes a separator 620 disposed in the vessel and defining at least two compartments 630, 640 within the vessel. A plenum 642 may be defined in the vessel common to each compartments, or each compartment may have its own separate plenum above the material disposed therein. Each compartment 630, 640 has a respective outlet 616A, 616B. It is contemplated that the vessel may be divided into any number of compartments and each compartment may independently be of varying shape.

The compartments 630, 640 may be configured to deliver the same or different materials to one or more units 302 and operate substantially similar to material delivery systems described above. Each outlet 616A, 616B of the delivery vessel can be independently coupled via a respective delivery lines 602A, 602B to two or more separate units 302. Each compartment may be coupled to an independent metering device 604A, 604B which controls the amount of material delivered from each compartment of the delivery vessel 610 for injection into the unit 302. The metering devices 604A, 604B may be configured similar to the metering devices described above.

The material delivery system includes a control module 120 for controlling the rates and/or amounts of material provided to the units 302 by the material delivery system 500.

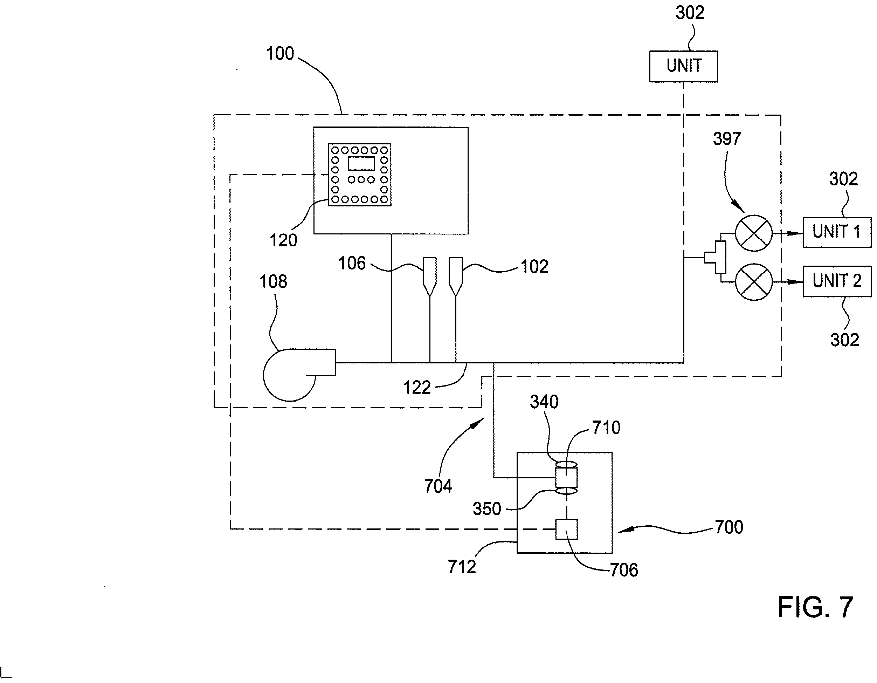

FIG. 7 is a simplified schematic of an embodiment of a material delivery system 700 which is mobile. The mobile material delivery system 700 may be configured to be coupled the unit 302 as described with reference to FIGS. 3C-D, among other configurations. The mobile material delivery system 700 is configured to be easily transportable over great distances thereby enabling the mobile material delivery system 700 to be shipped and coupled to one or more existing FCC units 302, on short notice. Additionally, the modular aspects of the mobile material delivery system 700 also enables the material delivery system 700 to be decoupled from one unit 302, transported, and coupled to another unit 302 with minimal effort. Thus, the mobile material delivery system 700 enables a refiner to configure a working refinery with material delivery systems with minimal lead time, thereby providing the process control flexibility required to quickly take advantage of market opportunities and address unplanned events requiring process change, such as limiting emissions through catalyst reactions.

The mobile material delivery system 700 includes a material delivery vessel 710 mounted to a transportable platform 712. The vessel 710 may be configured similar to the other vessels described herein. The vessel 710 is interface with one or more load cells 350 that are configured to provide a metric suitable for determining an amount of material dispensed from the vessel 710 from a change in weight of the vessel 710. The vessel 710 (and/or load cells 350) is interfaced with a calibration device 340 as described above.

The material delivery vessel 710 may be one or more vessel, or vessel and container combinations as described herein, among other suitable configurations. The vessel 710 is coupled by a conduit 704 to the process line 122 to deliver material to the units 302. The conduit 704 may be a flexible process pipe, a temporary process pipe, or a hard pipe.

The transportable platform 712 is generally configured to support the material delivery vessel 710 and associated components. The transportable platform 712 may be mounted to a foundation of a unit 302, or be disposed adjacent thereto. The transportable platform 712 is configured to facilitate shipment of the mobile material delivery system 700 by conventional means, e.g., road, air, sea or rail. For example, in an embodiment, the mobile material delivery system 700 has a transportable platform 712 in the form of a container, which allows for rapid delivery of the mobile material delivery system 700 by conventional means, for example, by truck, ship, plane, train, helicopter, barge and the like. It is also contemplated the transfer platform 712 may be integrally part of a trailer, barge, ship, plane, truck, rail car and the like. The ease of transporting the platform 712 advantageously allows the mobile material delivery system 700 to be coupled and begin injecting material to units 302 within a matter of hours or even as little as less than one hour, compared with the several days required to install a conventional permanent or semi-permanent injection system, which is substantially less than the time required to ship, assembly and install a conventional injection system.

The vessel 710 has a plurality of internal compartments, as described with reference to FIG. 6 which may provide mixtures of different material as needed or per a predefined process sequence. The mobile material delivery system 700 may also provide mixtures of different material as needed or per a predefined process sequence.

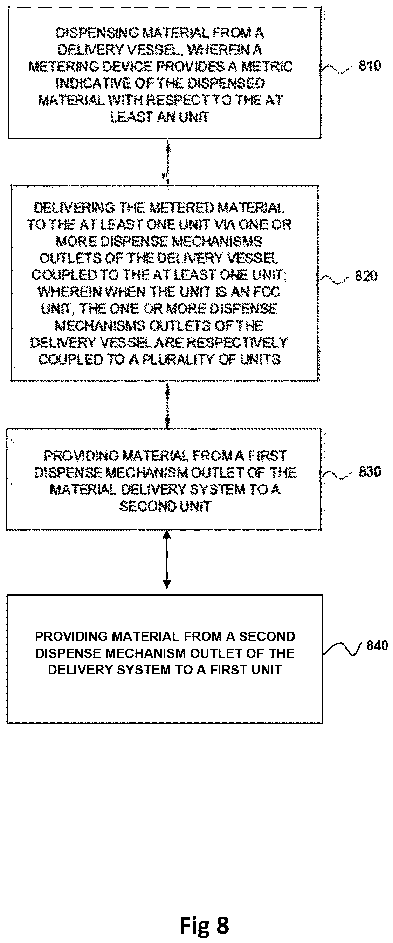

The invention also encompasses a method of delivering a material i.e. catalyst, additive, equilibrium spent catalyst, catalyst fines, etc. FIG. 8 is a flow diagram of a method 800 for delivering a material to a plurality of FCC units. The method 800 may be practiced with the material delivery system according to the invention described above. The method includes Step 810 dispensing material from a delivery vessel, wherein a metering device provides a metric indicative of the dispensed material with respect to the plurality of FCC units.

The metric of the material includes but is not limited to a metric such as the amount of material, detect the rate of material moving through a conduit of know area, volume of material, and weight of material in the material storage containers, compartment of vessel of the delivery system, either individually or a combination of two or more thereof. The determination may be made by metric such as but not limited to weight. Examples of weight determination include based on a 'gain-in-weight' and or 'loss-in-weight' by the vessel over the course of the material delivery. Step 810 may be repeated as many times as desired.

Step 820 includes delivering the metered material to the plurality of FCC units via one or more dispense mechanisms outlets of the delivery vessel coupled to the at least one unit

Steps 830 and/or 840 of the method 800 are practiced in simultaneously. At step 830, material from a first dispense mechanism outlet of the material delivery system may be provided to a second unit 302.

The material exiting the first and second dispense mechanism outlets may be of the same or different type of material. Switching of the connection of the first dispense mechanism outlet from the first unit to the second unit may be accomplished in a number of suitable manners, for example, by changing the state of a selector or diverter valve 397. For example, at step 840, material from the second dispense mechanism outlet of the delivery system may be provided to the first unit 302. Switching of the connection of the second dispense mechanism outlet from the second unit to the first unit may be accomplished as described above.

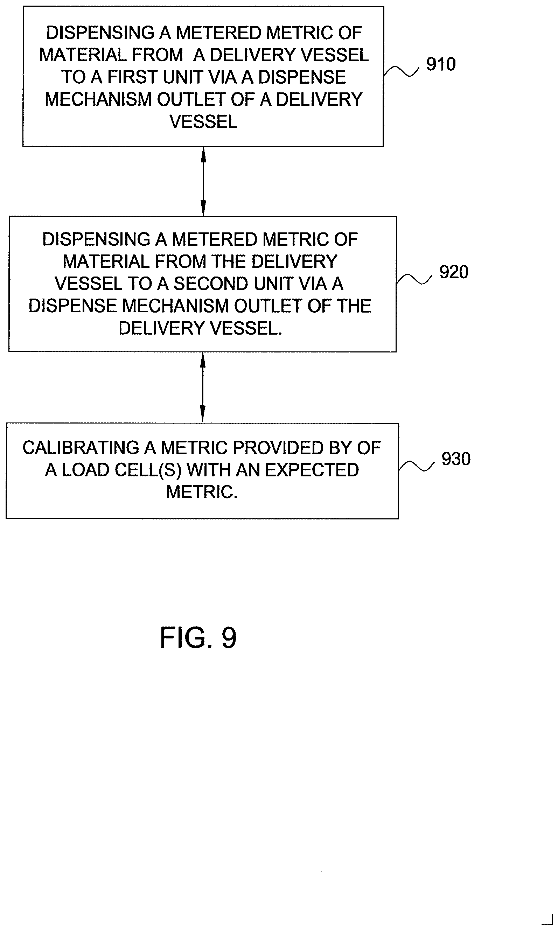

With reference to FIG. 9, next is described a method of providing a material to a plurality of FCC units. Step 910 dispensing a metered metric of material from a delivery vessel to a first unit via a dispense mechanism outlet of a delivery vessel. Step 920 includes dispensing a metered metric of material from the delivery vessel to a second unit via a dispense mechanism outlet of the delivery vessel.

The methods described are not limited by the frequency of the delivery of the material or materials, such as wherein a plurality of materials may be simultaneously dispensed.

The methods described allow delivery of multiple materials into a plurality of FCC units 302 as needed, simultaneously. For example, the materials may differ from each other such as wherein one material may control emissions from the cracking process and another material may control the resultant cracked product mix produced by the FCC units. The multiple materials which may or may not differ from each other may be delivered to the plurality of units 302. Controlling the delivery of multiple materials allows greater process flexibility with reduced capital expenditures.

Furthermore, the methods may include one or more of the following optional steps. In one method, the method includes step 930 of calibrating a metric provided by of a load cell(s) with an expected metric. The optional step may include automated weight calibrating by imparting a known force to a delivery vessel coupled to at least a load cell and determining if the at least one load cell accurately detects the known force imparted on the vessel. For example, a step may be added to the methods described to include calibrating or comparing a metric provided by of a load cell(s) with an expected metric of the known force. For example, refinery processes may continue without interruption while the load cells of a material delivery system coupled to the plurality of FCC units are calibrated in between addition(s) of material(s) without having to shut down the material delivery system, thereby maintaining a material delivery system in an operational state and ready to deliver material to one or more units as soon as the calibration step has been completed.

If the difference between the compared metric is outside of a predetermined range, a service flag may be issued. If the difference is within operational tolerances, then the software adjusts at least one of the output of the load cell or the software algorithm so that the output reading of the load cells is indicative of the true force upon the load cell, and consequently, a more accurate determination of the transfer material may be made. The method may also include recording the metric of the known force imparted on the vessel and determining any deviation between the recorded measured metric and known value.

The automated calibrating may be conducted a plurality of times at desired frequency intervals and as many times based on the degree of accuracy and precision need or wanted for an industrial system and acceptable deviation ranges that are allowed for a given weight of material to be delivered. The automated weight calibrating can periodically apply an equivalent weight to the delivery vessel and determine any deviation while continuing to deliver catalyst. In another method, the automated weight calibrating may impart an equivalent weight to the delivery vessel and monitor any deviation regular on periodic basis, such as per dose, per hour, per day, per week, etc. In another method, the method includes automated weight calibrating each delivery of a material to an industrial process to check for accuracy of the amount of catalyst delivered.

Corrective action with respect to any deviation between the measured metric and known metric of the amount of material may also be performed. Corrective actions include, but are not limited to, adjusting any deviation between the measured weight and known metric of the material in proportion to the ratio of the deviation between the measured weight and known metric of the material, adjusting the load cell downward to equal the known value of the force imparted on the vessel, adjusting the load cell upward to equal the known metric of the material, adjusting at least a subsequent delivery of a material into one or more units 302 based on the deviation. Corrective action may also include introducing, during a subsequent basic cycle time, an amount of the material which is less than the nominal addition amount when the measured weight is less than the known metric of the material or introducing, during a subsequent basic cycle time, an amount of the material which is more than the nominal addition amount when the measured weight is greater than the known value of force imparted.

The methods above may further include an optional step of integrating with an off-site computer database system. The information concerning any deviation between the measured metric and the known metric of the material may be sent to a remote control center outside of an FCC unit. For example, communication may be established between a control module of the material delivery system and a remote device in response to an event. Non-limiting examples of 'remote device' include such as but not limited to, a server or any computer terminal that interacts with the system via the Internet, a computer terminal located or accessed by a catalyst supplier or the production facility's inventory controller/planner, a lap top computer or PDA that is brought within communication range, etc.

The computer controller of the method of the invention can be linked via land-line Telco, wireless modem, internet connection, etc. to a central server which can maintain the various parameters of the embodiments of the disclosed addition system. The notifications of injection of materials, deviations in measurement of known weight, etc. can either be made by the addition system itself, or via an externally connected computer system. Furthermore, the offsite external system can permit parameters within the addition system controller to be changed without a person physically being required to be on-site at the controller unit.

Another option is tracking of injected material i.e. product, which can also be accomplished by sending data about a specific catalyst, date, time, amount of addition, back to the central database which further integrates with the previous usage of the catalyst as well as shipments to the specific location. From this inventory reconciliation, features such payment upon-delivery can be accomplished as well as notification to reorder upon reaching a minimum quantity threshold for a specific location. Data can be removed from the systems via a variety of means. Data can be physically extracted via on-board USB or other type of memory storage device. Alternatively, data can be sent via electronic means over the internet or via a secure data network within the refinery or externally via land-line Telco line, wireless cellular network, etc. When data is sent via wireless cellular over the internet or other insecure means, then a virtual private network (VPN) may be employed. VPN technology, either hardware or software based, helps secure data transfers or communication between the addition system controller and the home network.

The method may include: dispensing material for a material delivery system into a plurality of FCC units; storing a record of system activity indicative of the amount of material in a memory device disposed in an enclosure suitable of hazardous duty; and accessing the stored record from the enclosure while the enclosure remains sealed.

The method may include one or more of the following steps: determining an occurrence of a predefined event associated with the material delivery system; establishing communication between a control module of the material delivery system and a remote device in response to the event, wherein the remote device is remote from the material delivery system; and wherein the step of establishing communication comprises transmitting information to the remote device in response to a predefined event; and information comprises automatically submitting a reorder request for material if a material inventory level is below a predefined threshold; and transmitting information relating to the event between the remote device and control module.

The method may include one or more of the following steps: storing data from the material delivery system in a memory device of a control module; establishing communication between the control module and at least one of a remote or a local device in response to a predefined protocol, wherein the predefined protocol further comprises an event sensed by at least one of the material delivery system or the control module and wherein the predefined protocol comprises an event which exceeds a threshold; and transmitting data from the memory device of the control module to the at least one of the remote or the local device.

The method may include one or more of the following steps: automatically updating a material available inventory information of a plant in a digital memory device in response to a predetermined event; and automatically determining a sufficiency of the material available inventory of the plant. Method may further optionally include taking a re-supply action in response to a determination of insufficient material available inventory of the plant.

The method may include one or more of the following steps: dispensing material from the material delivery system; automatically updating material available inventory information of a plant in a digital memory device in response to the dispensing step; and automatically determining a sufficiency of the material available inventory of the plant. The method may further optionally include taking a re-supply action in response to a determination of insufficient catalyst available inventory of the plant.

The method may include one or more of the following steps:
dispensing material from the material delivery system; automatically updating a material available inventory information of a plant in a first digital memory device of the material delivery system in response to the dispensing step; transferring the material available inventory information of the plant from the first digital memory device to a second digital memory device accessible from a control room of the site at which the material delivery system is located; and automatically determining a sufficiency of the material available inventory of the plant. The method may further optionally include taking a re-supply action in response to a determination of insufficient catalyst available inventory of the refinery.

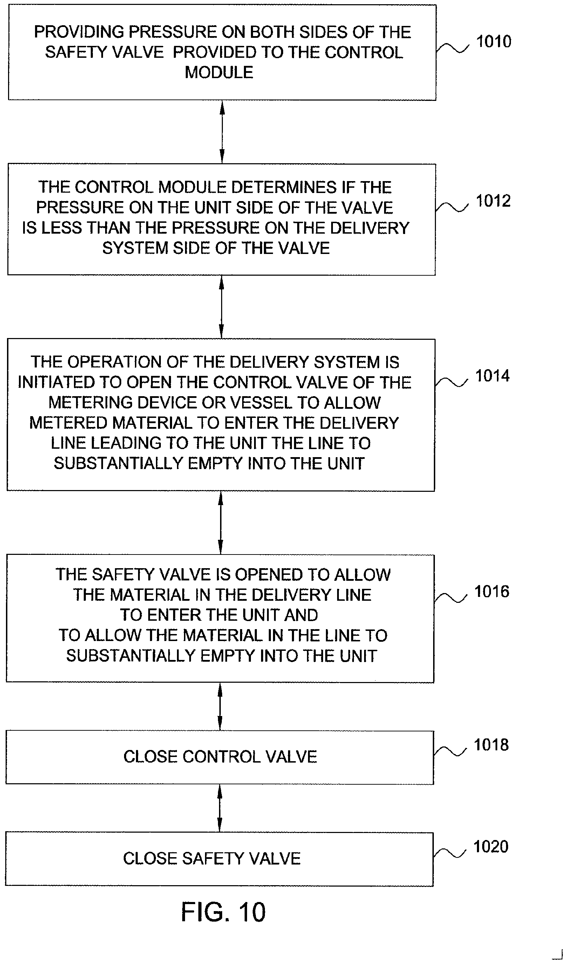

With reference to FIG. 10, next is described method of providing material to a unit in a manner that prevents backflow of material from one or more units to a delivery system, wherein the device to minimize backflow 399 is a safety valve. The method 1000 includes step 1010 wherein pressure on both sides of the safety valve 399 is provided to the control module 120. At step 1012, the control module 120 determines if the pressure on the FCC unit side of the safety valve 399 is less than the pressure on the delivery system side of the safety valve 399. If the pressure on the unit side of the valve 399 is less than the pressure on the delivery system side of the safety valve 399, the method proceeds to step 1014. If the pressure on the delivery system side of the safety valve 399 is less than the pressure on the unit system side of the safety valve 399, the method proceeds to step 1016 wherein remedial action is taken. Remedial action may include at least one of locking out (stopping or preventing) the operation of the delivery system, actuating an alarm or flag, or notifying a predefined person via an electronic message, among other suitable actions. In one method, remedial action includes preventing the safety valve 399 from changing to an open state.

At step 1014, the operation of the delivery system is initiated to open the control valve of the metering device or vessel to allow metered material to enter the delivery line leading to the unit 302. At step 1016, the safety valve 399 is opened to allow the material in the delivery line provided at step 1014 to enter the unit 302.

At step 1018, the control valve is closed. At step 1020, the safety valve 399 is closed. There may be a predefined delay between steps 1018 and 1020 to allow the material in the line to substantially empty into the unit 320.

Throughout the method 900, steps 1010 and 1012 are repeated to monitor if the safety valve 399 should be changed to and/or remain in a closed state.

### EXAMPLE 1: INSTALLATION OF THE DELIVERY VESSEL AND BASIC COMPONENTS

A delivery vessel is connected to the input port connections via hard-pipe or flexible hosing using the provided fittings. The delivery vessel has a configuration that provides 2 outlet fittings on each side of the delivery vessel which can be coupled to the plurality of units.

In one embodiment, a sensor is disposed near the container of the delivery system to provide information such as but not limited to the name or type of catalyst, quantity of catalyst within the container or container identification code. Ultimately, the catalyst within each container is identified for each respective input port. The control module 120 keeps track of which materials are coupled to each of the inlet ports as well as keeping a running total of the quantity of each material that a delivery vessel delivers to a respective unit. Hence, a delivery vessel can be connected to multiple units while keeping track of the type and amount of material and materials delivered to the plurality of units.

In one embodiment, each outlet port of the delivery vessel is connected via hard or flexible piping to an input port of a respective unit, where catalyst is normally injected.

A compressed gas supply is hooked up to the material delivery system. The compressed gas supply can be from sources such as fixed supply of the plant, portable unit, either individually or in combination of two or more thereof. In one embodiment, the compressed gas supply is of constant pressure and volume and contains minimum to substantially no water content. Examples of compressed gas supply includes such as but not limited to air supply, nitrogen, and inert gas either individually or in combination of two or more thereof.

Electrical connections are made to the main control unit, which powers the control module of the material delivery system, as well as the various valves and other electrical items within the material delivery system.

In one embodiment, the material delivery system contains its own frame to support the delivery vessel; hence, foundation is not required for this embodiment of the material delivery system.

### EXAMPLE 2: OPERATION OF THE SYSTEM

The control module evaluates the material and materials that require delivery to each respective unit based on one or more combinations of the following non-limiting non-exclusive factors:
a. Number of materials being added
b. Type of material being added (catalyst or additive, fine, etc.)
c. Required addition rate of each material
d. Any off-line time during the recent past. This is required to possibly make-up any downtime in future addition sequences
e. Period of addition (present time to end of day, present time to x(i.e. 24) hours later)
f. Desired quantity of each respective addition of one or more materials to one or more units
g. Precision and accuracy requirement

The control module evaluates the parameters above and determines the optimal sequence and quantity of delivery to use for the delivery of a given material. The control module is placed on automatic control and the sequence of additions of the various input ports is commenced. For each addition from specific port, the following is an embodiment of an operation:
a. The system confirms all outlet and inlet ports/valves are closed. The computer then opens the desired inlet port valve and applies vacuum via a built-in eductor fitted with carrier air to fill the delivery vessel to the desired weight of a material. The control module monitors various factors related to the delivery such as valve position, rate of weight change, actual weight in vessel, etc. and modifies the valve position or other parameter which is capable of changing the rate of addition of a material such that the final weight in the vessel is close to the target weight. The actual weight in the vessel is then recorded and from which the quantity of material to be added during this sequence into the unit may be resolved.
b. The inlet ports/valves are closed and vacuum application to the vessel is stopped.
c. The vessel is pressurized using air or other pressurizing medium to the desired pressure.
d. Unit or units to which material is provided is selected.
e. The outlet port valve is opened and the catalyst is transferred directly into a unit via the transfer line.
f. The weight of the vessel is monitored to determine when the vessel is empty.
g. The application of the air/pressurizing medium is discontinued and the outlet valve is closed.
h. Any desired hold time is effected at this point as determined by the computer controller based on the evaluation parameters above.
i. The sequence above may be repeated for the next material/outlet port combination provided to one or more units.
j. If the material input is being tracked by the system, or other external monitoring device such as silo measuring device, then the material delivery system's control module may use this input to notify the operator that the vessel/container/silo is either nearing empty or is empty. Notification can be provided via email, wireless cellular, hard-wire Telco line, light on unit or in control room, siren, or many other notification means available in the art. If replacement of a container coupled to the vessel is required, the operation of the material delivery system or opening of a specific port may be temporarily suspended while the container is changed. Embodiments may include the ability for the operator to suspend either the entire system, or a specific port for bin/container changeout. In the case in which a specific port is suspended, the control module which keeps track of the quantity of catalyst taken from that specific container/bin can be re-set to zero.

The embodiments of the disclosed material delivery system include the ability to add one or more materials into two or more units based on desired metric of each material on some frequency basis (per hour, day, week). The control module can also be programmed such as to perform one or more the features, illustrated in examples below.

### EXAMPLE 3: DEPENDENT OR INDEPENDENT RELATIONSHIP BETWEEN A PLURALITY OF MATERIALS DELIVERED TO SEPARATE FCC UNITS

In an embodiment, material A is fresh FCC base catalyst added at a rate of 10MT/day and material B, an additive such as sulfur oxide abatement additive i.e. Intercat Super SOXGETTER^{™}, is added at a rate of 1 MT/day to the same unit 1. The above process description is set-up to perform this type of operation sequence. The control module is set to know that 10MT/day of material A and 1 MT of material B needs to be delivered to the respective unit(s). If the amount of material A or B is changed, the control module may be programmed to maintain the relative proportion of material A to B.

In an example of 2 separate units, a given material such as A or B may be changed independently of the other material that is delivered to 2 respectively separate units. For example, even though material A being delivered to unit 1 may be changed to 15MT/day from the current 10MT/day, amount of material B being delivered to unit 2 may be maintained as is.

### EXAMPLE 4: AUTOMATICALLY ADJUSTING DELIVERY OF ONE OR MORE MATERIALS TO MEET SPECIFIC OPERATING PARAMETERS OF FCC UNITS

In some embodiments, specific operating parameters in FCC units connected to a material delivery system are maintained by increasing or decreasing the delivery of one or more materials to the respective FCC units.

In one embodiment, a refiner would like to maintain specific operating a specific level of sulfur dioxide (SO₂), to be emitted from FCC units. The control module can make appropriate changes in the delivery rate of a sulfur oxide abatement additive to a plurality of units from a single delivery system based upon input from a sulfur dioxide meter to maintain SO₂ at a desired level, such as needed to comply with environmental protection agency regulations etc. The control module can make the appropriate changes on a routine, continual basis, or just during emergency peak periods, such as when the SO₂ level reaches a certain percentage of the maximum allowable emissions, for each respective FCC unit. In this way, the refinery can maintain compliance with SO₂ emissions while utilizing less sulfur oxide material (catalyst B) while not having to outlay the capital for a dedicated delivery system for each unit.

Another embodiment is maintaining performance of the plurality of FCC units. Measured parameters such as but not limited to feed quality (feed API, metals content i.e. Nickel, Vanadium, Iron, Nitrogen, Sulfur) can have a major impact on an FCC unit performance, often measured by such parameters such as conversion or dry gas make. If one or more of these elements are expected, then the delivery rate of fresh catalyst can often be changed to mitigate or minimize the effect that any of these metals or other parameters may have on performance of the FCC unit. For instance, high nitrogen content in feed is known to poison the base FCC catalyst. If lab data on a specific feed of an FCC unit is known, then the control module of the material delivery system, either manually or automatically, can increase catalyst addition rates during this period for one or more FCC units. In a particular embodiment, changes in rate of delivery of a catalyst/material are automated as manpower on FCC unit is often limited. In an automated mode, lab data for feed nitrogen may be directly fed to the control module of the material delivery system and the delivery of a catalyst/material may be increased as the feed nitrogen increased, or decreased as the feed nitrogen decreased for one or more respective FCC units. This leads to an overall more consistent FCC operation, leading to increased profitability on the FCC unit. It should be appreciated that the material delivery system can increase or decrease the delivery of one or more materials and to one or more FCC units. For example, the material delivery system can increase or decrease the delivery of one or more materials such as sulfur oxide abatement additive and fresh catalyst to the same FCC unit or a plurality of different FCC units. The changes may be done manually, or the control module can make the calculation and make the change automatically.

The following Table 1 is an embodiment of some permutations of combinations of 4 types of materials which can be delivered to 2 units, respectively unit 1 and unit 2. There is virtually an infinite permutation of combinations of the type of materials and the respective quantities of a given material which can be delivered to units, either individually or in a combination of two or more materials to one or more units thereof sequentially or simultaneously.

**Table 1**

| | | unit | unit | unit | unit | unit | unit | unit |
|---|---|---|---|---|---|---|---|---|
| Material A fresh FCC base catalyst | | | 1 | 1 | 1 | 2 | 2 | 2 |
| Material B Sulfur oxide abatement additive | | | 1 | 1 | 2 | 1 | 2 | 2 |
| Material C | | | 1 | 2 | 2 | 1 | 2 | 2 |
| Material D | | | 2 | 2 | 2 | 1 | 1 | 1 |

## Claims

1. A method of providing material to a plurality of FCC units including a first unit and a second unit comprising:
dispensing material from a delivery vessel comprising a separator disposed in the vessel and defining at least two compartments within the vessel, each compartment coupled to a metering device which controls the amount of material delivered from each compartment of the delivery vessel into the plurality of FCC units wherein each metering device provides a metric indicative of the dispensed material with respect to the plurality of FCC units, the material is simultaneously dispensed to the first and second units via a plurality of dispense mechanism outlets respectively coupled to the first and the second unit, and at least one of the dispense mechanism outlets is selectively coupled via a selector or diverter valve to at least two of the plurality of FCC units .

2. A method according to claim 1, wherein each compartment of the delivery vessel is configured to deliver the same material to the plurality of FCC units.

3. A method according to claim 1, wherein each compartment of the delivery vessel is configured to deliver a different material to the plurality of FCC units.

4. A method according to claim 1, wherein the selector valve consists of several shut off valves coupled by a T.

5. A method according to claim 4, wherein the T is coupled to the outlet of the one or more dispense mechanisms.

6. A method according to claim 4 or claim 5, wherein the outlets of the shut off valves are coupled to the plurality of units.

7. The method of claim 1, further comprising minimizing backflow from the at least one unit of the plurality of FCC units to the delivery vessel or from one unit of the plurality of FCC units to another unit of the plurality of FCC units.

## Patentansprüche

1. Verfahren zum Bereitstellen von Material an eine Vielzahl von FCC-Einheiten, einschließlich einer ersten Einheit und einer zweiten Einheit, umfassend:
Abgeben von Material von einem Zuführbehälter, umfassend ein Trennelement, das in dem Behälter angeordnet ist und mindestens zwei Kammern innerhalb des Behälters definiert, wobei jede Kammer mit einer Dosiervorrichtung gekoppelt ist, die die Menge von Material, das von jeder Kammer des Zuführbehälters in die Vielzahl von FCC-Einheiten zugeführt wird, steuert, wobei jede Dosiervorrichtung eine Metrik bereitstellt, die das abgegebene Material in Bezug auf die Vielzahl von FCC-Einheiten angibt, das Material über eine Vielzahl von Abgabemechanismusauslässen, die jeweils mit der ersten und der zweiten Einheit gekoppelt sind, an die erste und die zweite Einheit gleichzeitig abgegeben wird, und mindestens einer der Abgabemechanismusauslässe über ein Wahl- oder Umlenkventil mit mindestens zwei der Vielzahl von FCC-Einheiten wahlweise gekoppelt ist.

2. Verfahren nach Anspruch 1, wobei jede Kammer des Zuführbehälters konfiguriert ist, um das gleiche Material der Vielzahl von FCC-Einheiten zuzuführen.

3. Verfahren nach Anspruch 1, wobei jede Kammer des Zuführbehälters konfiguriert ist, um ein unterschiedliches Material der Vielzahl von FCC-Einheiten zuzuführen.

4. Verfahren nach Anspruch 1, wobei das Wahlventil aus einigen Absperrventilen, die durch ein T-Stück gekoppelt sind, besteht.

5. Verfahren nach Anspruch 4, wobei das T-Stück mit dem Auslass des einen oder der mehreren Abgabemechanismen gekoppelt ist.

6. Verfahren nach Anspruch 4 oder 5, wobei die Auslässe der Absperrventile mit der Vielzahl von Einheiten gekoppelt sind.

7. Verfahren nach Anspruch 1, ferner umfassend ein Minimieren eines Rückflusses von der mindestens einen Einheit der Vielzahl von FCC-Einheiten zu dem Zuführbehälter oder von einer Einheit der Vielzahl von FCC-Einheiten zu einer anderen Einheit der Vielzahl von FCC-Einheiten.

## Revendications

1. Procédé de fourniture de matériau à une pluralité d'unités FCC comportant une première unité et une seconde unité comprenant :
la distribution de matériau à partir d'un récipient de distribution comprenant un séparateur disposé dans le récipient et la définition d'au moins deux compartiments à l'intérieur du récipient, chaque compartiment étant accouplé à un dispositif de mesure qui contrôle la quantité de matériau distribué à partir de chaque compartiment du récipient de distribution dans la pluralité d'unités FCC, dans lequel chaque dispositif de mesure fournit une mesure indiquant le matériau distribué par rapport à la pluralité d'unités FCC, le matériau est distribué simultanément dans les première et seconde unités par l'intermédiaire d'une pluralité de sorties de mécanisme de distribution respectivement accouplées aux première et seconde unités, et au moins une des sorties de mécanisme de distribution est sélectivement accouplée, par l'intermédiaire d'une vanne de sélection ou de dérivation, à au moins deux de la pluralité d'unités FCC.

2. Procédé selon la revendication 1, dans lequel chaque compartiment du récipient de distribution est conçu pour distribuer le même matériau à la pluralité d'unités FCC.

3. Procédé selon la revendication 1, dans lequel chaque compartiment du récipient de distribution est conçu pour distribuer un matériau différent à la pluralité d'unités FCC.

4. Procédé selon la revendication 1, dans lequel la vanne de sélection est constituée de plusieurs vannes d'arrêt accouplées par un T.

5. Procédé selon la revendication 4, dans lequel le T est accouplé à la sortie d'un ou de plusieurs mécanismes de distribution.

6. Procédé selon la revendication 4 ou la revendication 5, dans lequel les sorties des vannes d'arrêt sont accouplées à la pluralité d'unités.

7. Procédé selon la revendication 1, comprenant en outre la minimisation du reflux d'au moins une unité de la pluralité d'unités FCC vers le récipient de distribution ou d'une unité de la pluralité d'unités FCC vers une autre unité de la pluralité d'unités FCC.
